# EUROPEAN PATENT SPECIFICATION

(11) **EP 0 697 972 B1**
(45) Date of publication and mention of the grant of the patent: **23.06.1999**
(21) Application number: 95913126.9
(22) Date of filing: 15.03.1995
(51) Int. Cl.: B60T 11/16, B60T 11/236, F16D 25/12, B60T 11/22, F16D 25/08

(54) **HYDRAULIC ACTUATING SYSTEMS**
HYDRAULISCHE BETÄTIGUNGSSYSTEME
SYSTEMES HYDRAULIQUES DE COMMANDE

(30) Priority: 16.03.1994 GB 9405124
(43) Date of publication of application: 28.02.1996
(60) Divisional application: 98116504.6
(73) Proprietor: AUTOMOTIVE PRODUCTS FRANCE S.A., 95520 Herblay-Cergy-Pontoise (FR)
(72) Inventor: TOBIASZ, André, F-93800 Epinay-sur-Seine (FR)
(74) Representative: Morrall, Roger
(86) International application number: EP9500967
(87) International publication number: WO9525028

(56) References cited:
- WO-A-88/03235
- WO-A-88/09734
- WO-A-93/14963
- WO-A-94/07048

## Description

This invention relates to hydraulic actuating systems.

It is known to provide an hydraulic actuating system comprising a master cylinder interconnected with a slave cylinder via a conduit and to fill the system with hydraulic fluid prior to transportation of the system to the location where the system is to be fitted to a vehicle for the operation of the clutch of the vehicle. WO-A-8809734 shows such a system.

Such systems can be prone to leakage and to the reverse phenomenon of air ingress when rapid piston return movements occur and where used to actuate a vehicle clutch it is desirable for the system to adjust to take account of clutch wear.

WO-A-9314963 discloses a clutch master cylinder construction with a main actuating piston behind which a further chamber is defined by a flexible diaphragm. This chamber is used as a concentric fluid reservoir.

It is an object of the present invention to provide a clutch actuating system which is less susceptible to leakage and air ingress and which provides adjustment as the associated clutch wears.

Thus there is provided an hydraulic actuating system for the operation of a vehicle clutch comprising a master cylinder interconnected with a slave cylinder via a conduit means each cylinder comprising a piston which is axially displaceable in sealed sliding contact with an associated bore to define a working chamber on one side of the piston, said system being characterised in that behind each piston on the opposite side from its working chamber is provided a diaphragm which defines an auxiliary hydraulic fluid containing chamber between the diaphragm and the seal of the associated piston and in that the slave cylinder has a second wear compensating piston slidable in its main piston to define a clutch wear compensation chamber which communicates with the working chamber of the slave cylinder via valve means, said valve means opening to allow a reduction in the volume of the wear compensation chamber only when the main piston is forced into a fully retracted position by an associated clutch release lever following a given amount of wear of the associated clutch.

Such a system, by confining hydraulic fluid at the rear of each piston in an auxiliary chamber, is particularly resistant to the risk of air ingress since any tendency to draw fluid past either piston seal into the system will simply draw hydraulic fluid and not air into the system. Also, if any hydraulic fluid is forced out of the system past either piston seal this fluid is caught by the associated diaphragm so that the system does not leak hydraulic fluid. The provision of the wear compensation piston and chamber also allows the system to adjust automatically as the associated clutch wears.

In a preferred arrangement each diaphragm is annular in form and seals at its outer periphery with the cylinder housing and at its inner periphery with the associated piston.

Preferably passage means are provided between the auxiliary chamber and the working chamber of each piston, said passage means being arranged to open when the associated piston is not undertaking a working stroke.

The passage means may be arranged to open into the associated working chamber when the associated piston is in a retracted position.

Alternatively, the passage means may be provided in the associated piston and flow through the passage means is controlled by a flap valve on the associated piston which is held closed by working chamber pressure during each working stroke of the piston and which opens when the working chamber pressure falls below the pressure level in the associated auxiliary chamber on the retraction stroke of the piston.

The piston seal may be made from plastics material which is radially outwardly biased against the associated bore by a resilient insert which is a force fit in a recess in the piston. Preferably the insert and recess are of annular form. The insert may also incorporate the flap valve.

In a system in accordance with the present invention the master cylinder, slave cylinder and conduit may be filled with hydraulic fluid prior to fitment in a motor vehicle, the system being transportable in this pre-filled condition to the location where it is to be fitted to the vehicle.

At least one hydraulic quick-connect coupling may be included in the system allowing the system to be transported in two or more pre-filled sections which can be connected by the quick-connect coupling at the location where the system is to be fitted to a vehicle.

The invention also provides a method of providing a pre-filled clutch actuating system on a vehicle comprising providing an actuating system of the form described above, filling the master cylinder, slave cylinder and conduit with hydraulic fluid, transporting the system to a location where it is to be fitted on the vehicle, fitting the system on the vehicle and operating the master cylinder to condition the system ready for operation.

There is also provided a method of filling a system of the form described above in which sections of the system are inter connected via a quick-connect coupling, the method comprising taking each section of the system, evacuating air from the system via the portion of the quick connect coupling connected with each respective section of the system, and filling each section of the system with hydraulic fluid via said portion of the quick connect coupling.
The present invention will now be described, by way of example only, with reference to the accompanying drawings in which:-
Figure 1 shows a clutch actuation system according to the present invention;
Figures 2 and 3 show the master and slave cylinders respectively of the system of Figure 1;
Figures 3A and 4 show details of the piston sealing and wear compensating valve used in the slave cylinder of Figures 1 and 3;
Figures 5 and 6 show alternative piston sealing and flap valve arrangements for use in a cylinder according to the present invention;
Figure 7 shows an alternative cup seal arrangement which may be used in the system of the present invention, and
Figure 8 shows half of an alternative master cylinder design with a plastics piston bore.

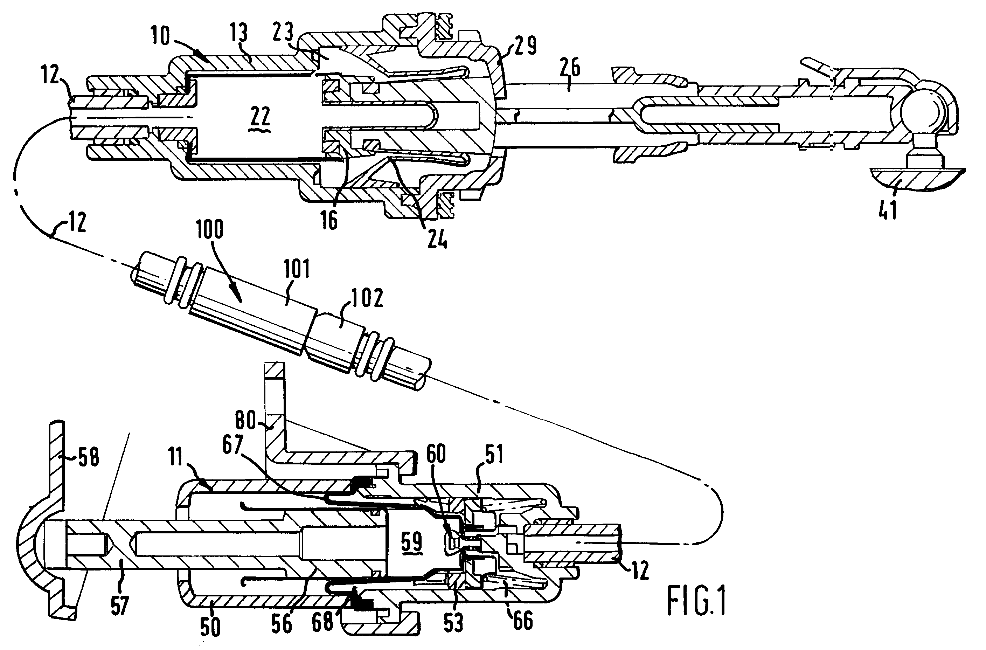

Referring to Figure 1 this shows an hydraulic clutch actuating system in the form of a master cylinder 10 interconnected with a slave cylinder 11 via a flexible conduit 12 with the cylinders in the clutch engaged position.

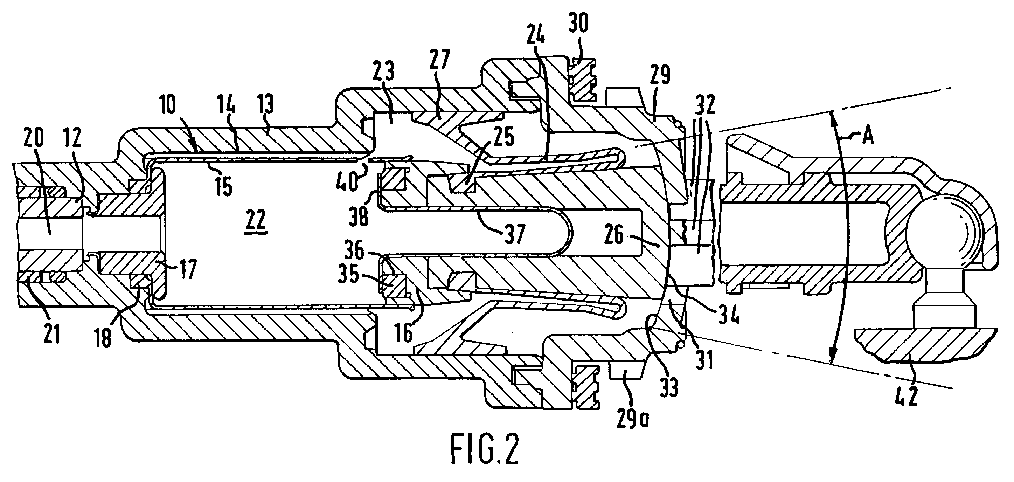

Referring to Figure 2 this shows the master cylinder 10 on a larger scale.

The master cylinder basically comprises a housing 13 made from plastics material such as a glass reinforced Nylon (e.g. Nylon 66 with 40% glass fibre reinforced) and which is provided with a stepped internal bore 14. Mounted within the bore 14 is a metal sleeve 15 within which a piston 16 is slideable. The sleeve is secured to housing 13 by a press fitting bushing 17 which compresses a sealing ring 18 between the sleeve and the housing.

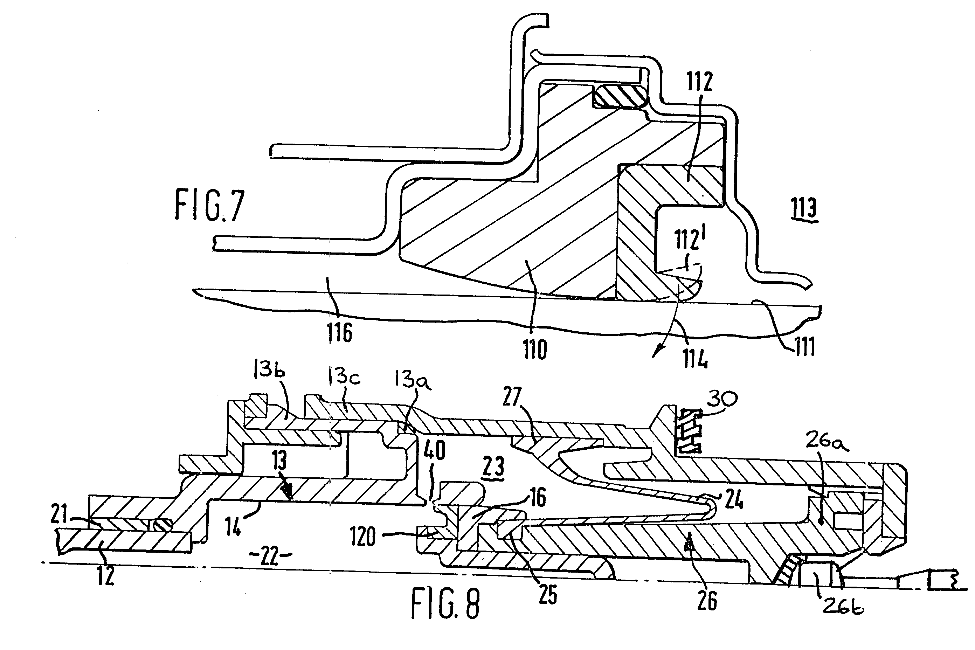

If desired sleeve 15 may be omitted and piston 16 may slide directly in plastics bore 14 (see Figure 8).

Bushing 17 surrounds an outlet 20 of the master cylinder in which one end of the flexible conduit 12 is retained by a serrated gripping sleeve 21.

Piston 16 defines a working chamber 22 in combination with the sleeve 15. Behind the piston 16 and on the other side from working chamber 22 is defined an auxilliary hydraulic chamber 23 which acts as the reservoir for the hydraulic actuating system. Chamber 23 is defined by rolling lobe diaphragm 24 the inner periphery 25 of which is trapped between piston 16 and an associated pushrod 26 and the outer periphery 27 of which slides on a larger diameter portion 28 of the stepped bore.

Housing 13 is completed by an end cap 29 which is secured to the remainder of the housing by ultra-sonic welding. The housing 13 is arranged to be supported in an aperture in an associated vehicle bulkhead (not shown) by a bayonet fastening arrangement of the type described in the Applicants earlier patent No. US-A-4488701. Part of this bayonet fastening is shown at 29a. A rubber seal 30 is arranged to be compressed between the housing and bulkhead to seal the bulkhead aperture and provide frictional grip to prevent disengagement of the bayonet fastening. The end cap has a cruciform apperture 31 the four limbs of which receive a respective one of the four ribs 32 provided on the sides of pushrod 26. The inner surface 33 of end cap 29 is part-spherical in form and this mates with a part-spherical surface 34 provided on the pushrod 26. The cooperation of these part-spherical surfaces and the cruciform apperture 31 with the ribs 32 allows the pushrod 26, and hence the associated piston 16, to pivot relative to the ball sleeve 15 in a generally arcuate manner as indicated by arrow A in figure 2.

Piston 16 is made from a flexible plastics material such as a polyammide (e.g. Nylon 12) and is radially outwardly biased into contact with sleeve 15 by an annular elastomeric insert 35 (Such as EPDM rubber) which is a force fit in an annular recess 36 provided in the piston. A metal tube 37 with a radial extending flange 38 is a press fit down the centre of piston 16 and pushrod 26 to hold the piston and diaphragm 25 on the pushrod.

The sleeve 15 is provided with a recuperation port 40 which when the piston is fully retracted, as shown in figures 1 and 2, allows communication between the reservoir 23 and the working chamber 22.

The pushrod 26 is connected with a clutch pedal arm 41.

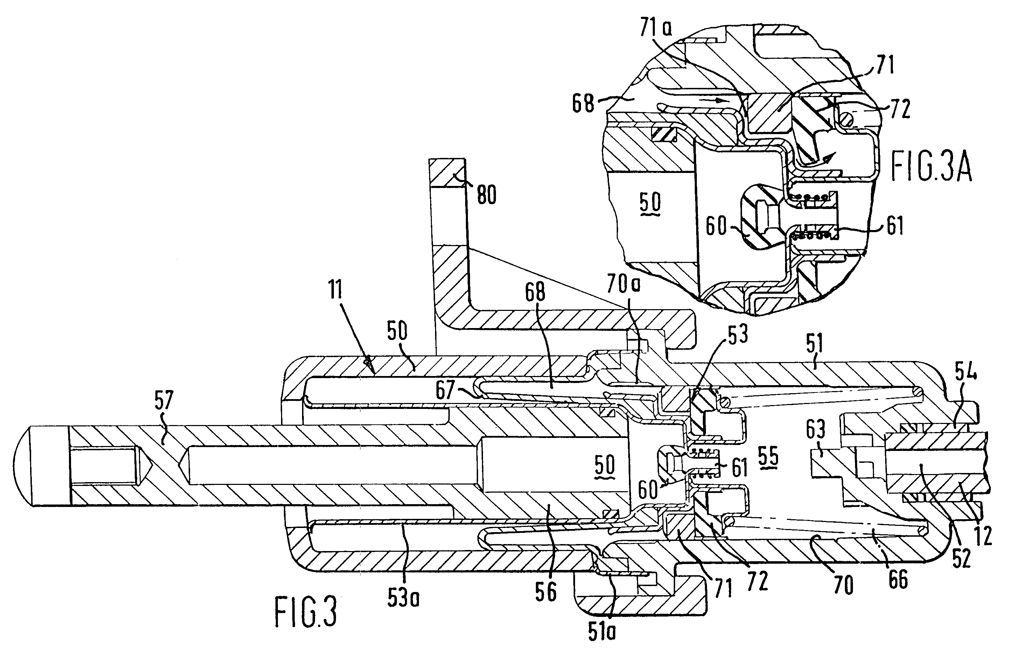

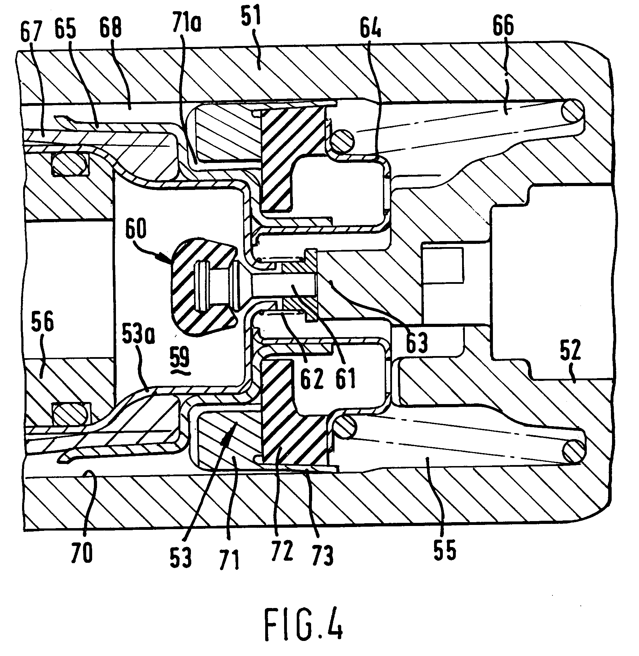

Figures 3 and 4 show details of the slave cylinder 11 on a larger scale. The slave cylinder comprises a two part housing 50, 51 in which the housing parts 50,51 which are made from the previously described glass fibre reinforced Nylon 66 and are held together by a bayonet fastening arrangement (not visible on the section shown). A main piston 53 slideable in housing part 51. The slave cylinder has an inlet 52 in which the other end of flexible conduit 12 is gripped by a serrated sleeve 54. Piston 53 together with housing part 51 defines a working chamber 55 of the slave cylinder.

Piston 53 includes a sheet metal tubular extension 53a in which a secondary piston 56 is axially slideable. Piston 56 includes an integral operating rod 57 which bears on one end of a clutch operating lever 58.

The secondary piston 56 defines in combination with tubular extension 53a a wear compensation chamber 59 which is placed in communication with the working chamber 55 when a valve member 60 carried by piston 53 is opened. The valve 60 is only opened when the main piston 53 is in its fully retracted position in which a valve stem 61 of the valve is displaced by a housing projection 63 to open the valve 60 against the action of light spring bias 62 (this is shown on a larger scale in figure 4).

As can also be most clearly seen from figure 4, the piston 53 includes further metal annular components 64 and 65 which are a press fit with each other when the piston is assembled. Component 64 receives biasing force from a main bias spring 66 which acts between the end of housing part 51 and the piston 53. Sheet metal part 65, which is a press fit on tubular extension 53a, retains the inner periphery of a rolling lobe diaphragm 67 in position relative to the piston 53. The outer periphery of the diaphragm is clamped between the two parts 50 and 51 of the housing. Diaphragm 67 thus defines an auxiliary hydraulic chamber 68 behind piston 53 which is full of hydraulic fluid.

Piston 53 makes a sealing contact with its co-operating bore 70 via a plastics (e.g. Nylon 12) sealing member 71 which is biased radially outwardly by an annular elastomeric (eg EPDM rubber) member 72 received in a recess 73 in the seal 71.

The slave cylinder 11 is secured to the clutch housing (not shown) by a mounting bracket 80 which is part of housing part 50.

The slave cylinder 11 is designed so that when the clutch is engaged the spring 66 applies the desired pre-load to the clutch operating mechanism via rod 57 to take-up all clearances in the mechanism. In this condition, when the spring 66 is applying the desired pre-load, the valve stem 61 does not make contact with the projection 63 so that valve 60 continues to seal the recuperation chamber 59 from the working chamber 55.

A quick-connect coulpling 100 is provided in the conduit 12. This coupling enables the system to be broken down into two pre-filled sections during transportation to the location where the system is to be installed on the vehicle. The two halves 101 and 102 of the coupling 100 serve as the two inlets into the two sections of the system through which the sections are filled with hydraulic fluid.

A suitable form of quick-connect coupling is described in the Applicants earlier patent No. GB-B-2195729 to which the reader is directed if further details of such couplings are required.

The assembly filling, transportation, installation and operation of the system described above will now be further described.

That section of the system which contains the master cylinder 10 and half 101 of the coupling is filled ready for transportation with the piston 16 fully retracted to the position shown in figure 1 thus maximising the volume of the working chamber 22 and the reservoir 23. The other section of the system which contains the slave cylinder 11 and half 102 of the coupling is filled with the secondary piston 56 in its fully retracted position (see figure 3) in which the wear compensation chamber 59 is of minimum volume. Both the master cylinder 10 and the slave cylinder 11 may be provided with transportation straps (not shown) which hold the pistons in the above described transportation positions. These straps are arranged to break on first use of the system after installation on the vehicle.

To fill the master cylinder 10 and the connected conduit, the associated half 101 of the coupling is connected with an evacuating and filling head (not shown) which first subjects the master cylinder, conduit and coupling half to a very high vacuum (eg 1mm of Mercury or less) to evacuate all air from the system section. During this evacuation it may be necessary to hold push-rod 26 out in order to maintain the piston 16 in the figure 1 and 2 position in which the working chamber 22 is at a maximum and the reservoir 23 is connected with the working chamber via recuperation port 40.

After the air evacuation the head connects a supply of hydraulic fluid to connector half 101 and a fixed volume of hydraulic fluid is introduced into the master cylinder, conduit and connector half. By admitting a predetermined volume of fluid into this section of the system the level of distortion of diaphragm 24 can be closely controlled as can the position taken up by the outer periphery 27 of the diaphragm in bore 28.

Similarly, to fill slave cylinder 11 and the other section of conduit, the other half 102 of the connector is connected with a similar evacuating and filling head (not shown). Because of the presence of valve 60 and the need to evacuate and fill wear compensation chamber 59 the evacuation and filling procedures are somewhat more detailed.

The initial stages of evacuation and filing of the slave cylinder must be carried out without housing part 50 in position so that tubular extension 53a can move further to the left then the position shown in figure 3 in which the right hand end of extension contacts the inside of housing part 50. With housing part 50 not in position diaphragm 67 is retained on housing part 51 by a metal annular ring 51a which also serves to hold the diaphragm in position and prevent twisting of the diaphragm when the two housing parts 50 and 51 are secured together by the bayonet fastening.

Initially on connection to a source of vacuum the working chambers 55 is evacuated and operating rod 57 is then depressed to cause valve stem 61 to contact projection 63 thus opening valve 60 and enabling compensation chamber 59 to be fully evacuated. Operating rod 57 is then released to allow valve 60 to close and to allow piston 53 to return to its figure 3 position under the action of spring 66.

Operating rod 57 is then pulled away from housing part 51 bringing with it piston extension 53a until seal 71 moves over axial grooves 70a in bore 70 thus placing auxilliary chamber 68 in communication with working chamber 55 and allowing complete evacuation of the auxiliary chamber 68. During this movement of operating rod 57 the friction between piston 56 and extension 53a maintains wear compensation chamber 59 at its minimum volume.

With the operating rod 57 held in this extended position the filling head is then switched over to supply hydraulic fluid under pressure through coupling half 102 to fill working chamber 55 and auxiliary chamber 18 via grooves 70a. The pressure of fluid supplied to working chamber 55 should not be so high as to distort diaphragm 67 and overfill auxiliary chamber 68.

When the auxiliary chamber 68 is filled operating rod 57 is pushed into the housing part 51 to close-off the grooves 70a. The wear compensation chamber can then be filled by increasing the pressure of the hydraulic fluid supplied to the slave cylinder so that the fluid pressure opens valve 60 against the action of light spring 62. Alternatively, operating rod 57 can be fully pushed into housing part 51 so that projection 63 opens valve 60 to allow filling of chamber 59.

With the filling head still connected to the source of hydraulic fluid the operating rod 57 is now pushed into the housing part 51 to approximately the position shown in figure 3 and the housing part 50 is then secured in position using the bayonet fastening. The volume of fluid expelled from working chamber 55 when the operating rod 57 is pushed into body part 51 exits from the coupling half 102 and returns to the connected hydraulic supply.

This completes the filling of the system halves which can now be transported in this pre-filled condition to the location where they are to be fitted on the vehicle.

Once the two halves of the system has been fitted to a vehicle and interconnected via the coupling the first operation of the master cylinder piston 16 is arranged to force fluid through the conduit 12 into working chamber 55 of the slave cylinder and hence through the valve 60 into wear compensation chamber 59 so that the secondary piston 56 is fully extended and contacts the associated clutch operating lever 58 to ready the system for subsequent use.

It is likely that the initial extension of secondary piston 56 will overstroke the operating lever 58 so that when the clutch pedal 41 is released after the initial operation of the master cylinder, the slave cylinder pistons will be fully retracted under the action of the lever 58 so that valve 60 is opened by projection 63 and the secondary piston moves to the right, as viewed in figure 3, reducing the volume of compensation chamber 59 until the spring 66 applies only the desired pre-load on the lever 58. In this condition valve 69 will be closed and valve stem slightly spaced from projection 63 with the master cylinder also in the figure 1 position.

To disengage the clutch the pedal 41 is depressed thus displacing master cylinder piston 16 along bore sleeve 15 hence forcing hydraulic fluid through the conduit 12 and into the working chamber 55 of the slave cylinder to axially displace the main slave cylinder piston 53 and hence move the clutch operating lever 58 via the operating rod 57 of the slave cylinder.

Eventually the driven plate of the associated clutch will have worn sufficiently for the clutch release lever 58 to occupy a position slightly to the right of that shown in figure 1 when the clutch is engaged. In this slightly worn condition of the driven plate the end loading on operating rod 57 overcomes the main bias spring 66 of the slave cylinder to unseat the valve 60 by contact of the valve stem 61 with the projection 63. This allows a small amount of fluid to leave the wear compensation chamber 59 and enter the working chamber 55 of the slave cylinder thus allowing the secondary piston to move slightly to the right relative to the associated tubular extension 53a of piston 53. This displacement of the secondary piston 56 reduces the end loading on the operating rod 57 hence allowing the main bias spring 66 to restore the desired pre-load on the lever 58 and move valve stem 61 out of contact with the projection 53 thus closing off the communication between the wear compensation chamber 59 and the working chamber 55.

Hence throughout the wear life of the clutch the valve 60 is periodically unseated to allow the wear compensation chamber 59 to decrease in volume so that the secondary piston gradually moves to the right from its fully extended position to its fully retracted position shown in figure 3. By means of this adjustment the operative position of the clutch release lever 58 is kept substantially at the initial start postion shown in figure 1.

As can be seen from figure 3A and figure 4, the elastomeric insert 72 used in the main piston 53 of the slave cylinder acts as a flap valve which allows communication between the auxiliary hydraulic chamber 68 and the working chamber 55 via passages 71a in seal 71 on the return stroke of the main piston 53 when the pressure of fluid in the auxiliary chamber 68 is higher than that in the working chamber 55. The flap valve is designed to avoid the pressure in the auxilliary chamber rising substantially above 1 bar.
Both the master cylinder and the slave cylinder, by the provision of auxiliary chambers 23 and 68 behind the associated main pistons 16 and 53, provide an actuating system which is particularly fluid tight since any fluid leaking past the main pistons 16 and 53 is caught by the auxiliary chambers 23 and 68. Also any tendency for air ingress due to rapid return of the main pistons 16 and 53 is prevented since any fluid drawn into the working chambers 22 and 55 on such a rapid return stroke will be hydraulic fluid and not air.

Additionally the master cylinder is of a particularly compact and efficient construction which does not require an external reservoir since the chamber 23 contains sufficient fluid to accomodate the operating requirements of the system throughout its design life. If desired, however, an external reservoir could be connected to chamber 23.

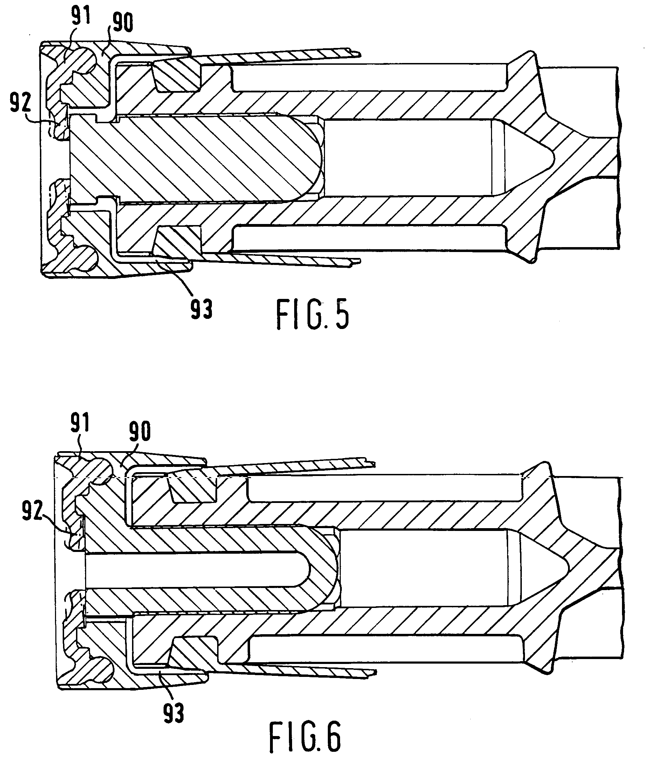

Figures 5 and 6 show alternative piston sealing arrangements suitable for use in the master cylinder 10 (and also with suitable adaption in the slave cylinder 11). In both figures 5 and 6 plastics piston seals 90 are radially outwardly biased into contact with an associated bore (not shown) by an elastomeric insert 91 which includes a flap valve portion 92 which controls the flow of fluid from the right hand side of the piston to the left hand side of the piston via a recuperation passage 93.

This concept of a piston with a flexible plastics seal energised by a elastomeric insert is applicable to hydraulic cylinders other than the master and slave cylinders described above. Also the use of a flap valve built into the energising elastomeric material has wider applications in hydraulic cylinders in general where control of recuperation etc is required.

It has been found that the use of a relatively rigid by flexible plastics seal material greatly reduces the stick-slip effect in plastics bores and the consequent seal squeak and judder as compared to a rubber seal operating in a plastics bore.

Also, although in all the sealing arrangements described above the flexible plastics seal is energised by an elastomeric insert it will be appreciated that other forms of resilient insert can be used. For example, a circumferentially extending but radially resilient spring coil.

The master cylinder 10 and slave cylinder 11 may also use a more conventional cup-type seal as shown in the slave cylinder seal arrangement figure 7 in which a plastic piston 110 slides in a bore 111 and is sealed by a cup-seal 112 which when pressurised by the pressure in working chamber 113 tends to be deflected radially outwardly as indicated by arrow 114. If the pressure in auxiliary chamber 116 rises significantly above the pressure in working chamber 113, or if piston 110 moves rapidly in direction 115 on a return stroke, the cup seal 112 moves radially inwardly to the 112' position to allow recuperation between anxiliary chamber 116 and working chamber 113 around the outside of piston 110 between the piston and its cooperating bore 111.

Figure 8 shows an alternative master cylinder which does not use the metal sleeve 15 shown in figures 1 and 2 and also shows the piston 16 sealed by a cup-seal 120.

Alternatively piston 16 may have a plastics sealing portion which is biased radially outwardly by an elastomeric insert.

In the Figure 8 construction the housing 13 is split at the opposite end from the construction shown in Figure 2 with the auxiliary chamber 23 sealed by a seal 13a which acts between housing portions 13b and 13c. Also pushrod 26 includes a portion 26 which is guided within housing portion 13c and a ball joint 26b which provides the necessary articulation.

The seal arrangement of claim 6 is the subject of the Applicant's co-pending European patent application EP98 116504.6.

## Claims

1. An hydraulic actuating system for the operation of a vehicle clutch comprising a master cylinder (10) interconnected with a slave cylinder (11) via conduit means (12) each cylinder comprising a piston (16,53) which is axially displaceable in sealed sliding contact with an associated bore (14,15:70) to define a working chamber (22,55) on one side of the piston, said system being characterised in that behind each piston (16,53) on the opposite side from its working chamber is provided a diaphragm (24,67) which defines an auxiliary hydraulic fluid containing chamber (23,68) between the diaphragm and a seal of the associated piston and in that the slave cylinder (11) has a second wear compensating piston (56) slidable in its main piston (53,53a) to define a clutch wear compensation chamber (59) which communicates with the working chamber (55) of the slave cylinder via valve means (60), said valve means opening to allow a reduction in the volume of the wear compensation chamber only when the main piston (53) is forced into a fully retracted position by an associated clutch release lever (58) following a given amount of wear of the associated clutch

2. A system according to claim 1 in which each diaphragm (24,67) is annular in form and seals at its outer periphery with the cylinder housing (13,51) and at its inner periphery with the associated piston (16,53)

3. A system according to claim 1 or claim 2 in which passage means (40,71a) are provided between the auxiliary chamber (23,68) and the working chamber (22,55) of each piston (16,53), said passage means being arranged to open when the associated piston is not undertaking a working stroke.

4. A system according to Claim 3 in which the end of the passage means (40,71a) is arranged to open into the associated working chamber (22,55) when the associated piston (16,53) is in a retracted position.

5. A system according to Claim 3 in which the passage means (71a) is provided in the associated piston (53) and flow through the passage means is controlled by a flap valve (72) on the associated piston which is held closed by working chamber pressure during each working stroke of the piston and which opens when the working chamber pressure falls below the pressure level in the associated auxiliary chamber (68) on the retraction stroke of the piston.

6. A system according to any one of claims 1 to 5 in which the piston seal (16,71) is made from plastics material which is radially outwardly biassed against the associated bore (15,70) by a resilient insert (35,72) which is a force fit in a recess (36,73) in the piston.

7. A system according to Claim 6 in which the insert (35,72) and recess (36,73) are of annular form.

8. A system according to Claim 6 or Claim 7 when dependent on Claim 5 in which the insert (72) incorporates the flap valve.

9. A system according to any one of claims 6 to 8 in which the insert (35,72) is of elastomeric material.

10. A system according to claim 6 in which the insert is made from resilient metal.

11. A system according to any one of claims 1 to 10 in which the bore (14,70) of each cylinder (10,11) is made from plastics material.

12. A system according to any one of claims 1 to 11 in which the bore of the master cylinder (10) is a metal sleeve (15).

13. A system according to any one of claims 1 to 12 in which the master cylinder (10), slave cylinder (11) and conduit (12) are filled with hydraulic fluid prior to fitment in a motor vehicle, the system being transportable in this pre-filled condition to the location where it is to be fitted to a vehicle.

14. A system according to claim 13 including at least one hydraulic quick-connect coupling (100) allowing the system to be transported in two or more pre-filled sections which can be connected by the quick-connect coupling at the location where the system is to be fitted to the vehicle.

15. A system according to claim 13 or 14 which is designed to be transported to the location where it is to be fitted to the vehicle with the working chamber (22) of the master cylinder (10) at or near its maximum volume and the wear compensation chamber (59) of the slave cylinder (11) at or near its minimum volume.

16. A system according to claim 15 in which on the initial working stroke of the master cylinder (10) the fluid discharged from the working chamber (22) of the master cylinder is admitted into the wear compensation chamber (59) of the slave cylinder (11) to full extend the second piston and bring the second piston (56) into operative connection with the associated clutch release lever (58).

17. A method of providing a pre-filled clutch actuating system on a vehicle comprising providing an actuating system according to any one of claims 1 to 16, filling the master cylinder (10), slave cylinder (11) and conduit (12) with hydraulic fluid, transporting the system to a location where it is to be fitted on the vehicle, fitting the system on the vehicle and operating the master cylinder (10) to condition the system ready for operation.

18. A method according to claim 17 comprising providing an actuating system according to claims 13 and 14 in which the initial operation of the master cylinder (10) discharges fluid from the master cylinder into the wear compensation chamber (59) of the slave cylinder (11) to extend the second piston (56) and bring the second piston into operative connection with the associated clutch release lever (58).

19. A method according to claim 17, providing an actuating system according to claim 14, taking each section of the system, evacuating air from the system via the portion of the quick connect coupling (100) connected with each respective section of the system and filling each section of the system with hydraulic fluid via said portion of the quick connect coupling (100).

20. A method according to claim 19 in which the working chamber (22) of the master cylinder (10) is held at or near its maximum volume during evacuation and filling.

21. A method according to claim 19 or 20 for filling a system according to claim 15 in which the volume of the wear compensation chamber (59) is held at or near its minimum volume during evacuation and filling.

22. A method according to any one of claims 19 to 21 in which the pistons (16,53) of the master (10) and slave (11) cylinder are held in axial positions in their respective bores (15,70) which place their respective auxilliary chambers (23,68) in communication with their respective working chambers (22,55) during evacuation and filling.

23. A method according to claim 22 in which the communication between the working (22) and auxiliary (23) chambers of the master cylinder (10) is achieved via a recuperation port (40) provided in the master cylinder bore (15) which is open when the working chamber is at or near its maximum volume.

24. A method according to claim 22 or 23 in which the communication between the working (55) and auxiliary (68) chambers of the slave cylinder (11) is achieved by extending the slave cylinder beyond its normal working stroke to a location at which the main piston (53) overflies one or more axial grooves (70a) in the piston bore (70) which interconnect the working and auxiliary chambers.

25. A method according to claim 24 in which, in order to allow the extension of the slave cylinder (11) beyond its normal working stroke, part (50) of the slave cylinder housing is removed.

## Patentansprüche

1. Hydraulisches Betätigungssystem für den Betrieb einer Fahrzeugkupplung, mit einem Geberzylinder (10), der mit einem Nehmerzylinder (11) über eine Leitungseinrichtung (12) verbunden ist, wobei jeder Zylinder einen Kolben (16, 53) aufweist, der in abgedichtetem Gleitkontakt mit einer zugehörigen Bohrung (14, 15: 70) axial verschiebbar ist, um eine Arbeitskammer (22, 55) auf einer Seite des Kolbens zu begrenzen, wobei das System dadurch gekennzeichnet ist, daß hinter jedem Kolben (16, 53) auf der von seiner Arbeitskammer entgegengesetzten Seite eine Membran (24, 67) vorgesehen ist, die eine Hydraulikflüssigkeit enthaltende Nebenkammer (23, 68) zwischen der Membran und einer Dichtung des zugehörigen Kolbens begrenzt, und daß der Nehmerzylinder (11) einen zweiten Abnutzungskompensierkolben (56) hat, der in seinem Hauptkolben (53, 53a) verschiebbar ist, um eine Kupplungsabnutzungskompensationskammer (59) zu begrenzen, die mit der Arbeitskammer (55) des Nehmerzylinders über eine Ventileinrichtung (60) in Verbindung steht, wobei die Ventileinrichtung sich öffnet, um eine Verringerung des Volumens der Abnutzungskompensationskammer nur dann zu gestatten, wenn der Hauptkolben (53) von einem zugehörigen Kupplungsausrückhebel (58) nachfolgend auf einen bestimmten Abnutzungsbetrag der zugehörigen Kupplung in eine vollständig zurückgefahrene Stellung gezwungen wird.

2. System nach Anspruch 1, bei dem jede Membran (24, 67) ringförmig ist und an ihrem äußeren Rand mit dem Zylindergehäuse (13, 51) und an ihrem inneren Rand mit dem zugehörigen Kolben (16, 53) dichtet.

3. System nach Anspruch 1 oder Anspruch 2, bei dem eine Durchgangseinrichtung (40, 71a) zwischen der Nebenkammer (23, 68) und der Arbeitskammer (22, 55) eines jeden Kolbens (16, 53) vorgesehen ist, wobei die Durchgangseinrichtung dafür ausgebildet ist, sich zu öffnen, wenn der zugehörige Kolben keinen Arbeitshub unternimmt.

4. System nach Anspruch 3, bei dem das Ende der Durchgangseinrichtung (40, 71a) dafür ausgebildet ist, sich in die zugehörige Arbeitskammer (22, 55) zu öffnen, wenn der zugehörige Kolben (16, 53) in einer zurückgefahrenen Stellung ist.

5. System nach Anspruch 3, bei dem die Durchgangseinrichtung (71a) in dem zugehörigen Kolben (53) vorgesehen ist, und die Strömung durch die Durchgangseinrichtung von einem Klappenventil (72) an dem zugehörigen Kolben gesteuert wird, das von dem Arbeitskammerdruck während eines jeden Arbeitshubes des Kolbens geschlossen gehalten wird, und das sich öffnet, wenn der Arbeitskammerdruck unter den Druckpegel in der zugehörigen Nebenkammer (68) beim Rückfahrhub des Kolbens fällt.

6. System nach einem der Ansprüche 1 bis 5, bei dem die Kolbendichtung (16, 71) aus einem Kunststoff hergestellt ist, der radial nach außen gegen die zugehörige Bohrung (15, 70) von einem federnd nachgiebigen Einsatzstück (35, 72) vorgespannt ist, das ein Festsitz in einer Ausnehmung (36, 73) in dem Kolben ist.

7. System nach Anspruch 6, bei dem das Einsatzstück (35, 72) und die Ausnehmung (36, 73) ringförmig sind.

8. System nach Anspruch 6 oder Anspruch 7, wenn auf Anspruch 5 rückbezogen, bei dem das Einsatzstück (72) das Klappenventil beinhaltet .

9. System nach einem der Ansprüche 6 bis 8, bei dem das Einsatzstück (35, 72) aus einem elastomeren Material ist.

10. System nach Anspruch 6, bei dem das Einsatzstück aus einem federnd nachgiebigen Metall hergestellt ist.

11. System nach einem der Ansprüche 1 bis 10, bei dem die Bohrung (14, 70) eines jeden Zylinders (10,11) aus Kunststoff hergestellt ist.

12. System nach einem der Ansprüche 1 bis 11, bei dem die Bohrung des Geberzylinders (10) eine Metallhülse (15) ist.

13. System nach einem der Ansprüche 1 bis 12, bei dem der Geberzylinder (10), der Nehmerzylinder (11) und die Leitung (12) mit Hydraulikflüssigkeit vor dem Einbau in ein Kraftfahrzeug gefüllt werden, wobei das System in diesem vorgefüllten Zustand an den Ort transportierbar ist, wo es in ein Fahrzeug eingebaut wird.

14. System nach Anspruch 13, das mindestens eine hydraulische Schnellkupplung (100) enthält, die es gestattet, daß das System in zwei oder mehr vorgefüllten Abschnitten transportiert werden kann, die mit der Schnellkuplung an dem Ort verbunden werden können, wo das System in das Fahrzeug eingebaut wird.

15. System nach Anspruch 13 oder 14, das dafür bestimmt ist, an den Ort transportiert zu werden, wo es in ein Fahrzeug eingebaut wird, wobei die Arbeitskammer (22) des Geberzylinders (10) an ihrem oder in der Nähe ihres Maximalvolumens und die Abnutzungskompensationskammer (59) des Nehmerzylinders (11) an ihrem oder in der Nähe ihres Minimalvolumens ist.

16. System nach Anspruch 15, bei dem die beim ersten Arbeitshub des Geberzylinders (10) aus der Arbeitskammer (22) des Geberzylinders ausgestoßene Flüssigkeit in die Abnutzungskompensationskammer (59) des Nehmerzylinders (11) eintreten gelassen wird, um den zweiten Kolben vollständig auszufahren und den zweiten Kolben (56) in eine Wirkverbindung mit dem zugehörigen Kupplungsausrückhebel (58) zu bringen.

17. Verfahren zum Bereitstellen eines vorgefüllten Kupplungsbetätigungssystems an einem Fahrzeug, mit Bereitstellen eines Betätigungssystems entsprechend einem der Ansprüche 1 bis 16, Füllen des Geberzylinders (10), Nehmerzylinders (11) und der Leitung (12) mit Hydraulikflüssigkeit, Transportieren des Systems an einen Ort, wo es in ein Fahrzeug eingebaut wird, Einbauen des Systems in das Fahrzeug und Betätigen des Geberzylinders (10), um das System in einen betriebsbereiten Zustand zu bringen.

18. Verfahren nach Anspruch 17, mit Bereitstellen eines Betätigungssystems entsprechend den Ansprüchen 13 und 14, bei dem die erstmalige Betätigung des Geberzylinders (10) Flüssigkeit aus dem Geberzylinder in die Abnutzungskompensationskammer (59) des Nehmerzylinders (11) ausstösst, um den zweiten Kolben (56) auszufahren und den zweiten Kolben in eine Wirkverbindung mit dem zugehörigen Kupplungsausrückhebel (58) zu bringen.

19. Verfahren nach Anspruch 17, Bereitstellen eines Betätigungssystems nach Anspruch 14, Hernehmen eines jeden Abschnitts des Systems, Evakuieren von Luft aus dem System über den Teil der Schnellkupplung (100), der mit jedem zugehörigen Abschnitt des Systems verbunden ist, und Füllen eines jeden Abschnitts des Systems mit Hydraulikflüssigkeit über den Teil der Schnellkupplung (100).

20. Verfahren nach Anspruch 19, bei dem die Arbeitskammer (22) des Geberzylinders (10) an ihrem oder in der Nähe ihres Maximalvolumens während der Evakuierung und Befüllung gehalten wird.

21. Verfahren nach Anspruch 19 oder 20 zum Füllen eines Systems nach Anspruch 15, bei dem das Volumen der Abnutzungskompensationskammer (59) an ihrem oder in der Nähe ihres Minimalvolumens während der Evakuierung und Befüllung gehalten wird.

22. Verfahren nach einem der Ansprüche 19 bis 21, bei dem die Kolben (16, 53) des Geber(10)- und Nehmer(11)-Zylinders in axialen Stellungen in ihren jeweiligen Bohrungen (15, 70) gehalten werden, die ihre jeweiligen Nebenkammern (23, 68) in Verbindung mit ihren jeweiligen Arbeitskammern (22, 55) während der Evakuierung und Befüllung setzen.

23. Verfahren nach Anspruch 22, bei dem die Verbindung zwischen der Arbeits (22)- und Neben(23)-Kammer des Hauptzylinders (10) über eine in der Geberzylinderbohrung (15) vorgesehenen Erholungsöffnung (40) erreicht wird, die offen ist, wenn sich die Arbeitskammer an ihrem oder in der Nähe ihres Maximalvolumens befindet.

24. Verfahren nach Anspruch 22 oder 23, bei die Verbindung zwischen der Arbeits(55)- und Neben(68)-Kammer des Nehmerzylinders (11) durch Ausfahren des Nehmerzylinders über seinen normalen Arbeitshub hinaus bis zu einer Stelle erreicht wird, an welcher der Hauptkolben (53) eine oder mehrere Axialnuten (70a) in der Kolbenbohrung (70) überdeckt, welche die Arbeits- und Nebenkammer miteinander verbinden.

25. Verfahren nach Anspruch 24, bei dem ein Teil (50) des Nehmerzylindergehäuses entfernt wird, um das Ausfahren des Nehmerzylinders (11) über seinen normalen Arbeitshub hinaus zu gestatten.

## Revendications

1. Système d'actionnement hydraulique pour le fonctionnement d'un embrayage de véhicule comprenant un cylindre maître (10) relié à un cylindre esclave (11) par l'intermédiaire d'un moyen formant conduit (12), chaque cylindre comprenant un piston (16, 53) qui peut se déplacer axialement en contact coulissant étanche avec un alésage associé (14, 15, 70) afin de définir une chambre de travail (22, 25) sur un côté du piston, ledit système étant caractérisé en ce que derrière chaque piston (16, 53), sur le côté opposé par rapport à sa chambre de travail, est prévue une membrane (24, 67) qui définit une chambre auxiliaire contenant un fluide hydraulique (23, 68) entre la membrane et un joint d'étanchéité du piston associé, et en ce que le cylindre esclave (11) présente un deuxième piston de compensation d'usure (56) pouvant coulisser dans son piston principal (53, 53a) afin de définir une chambre de compensation d'usure d'embrayage (59) qui communique avec la chambre de travail (55) du cylindre esclave par l'intermédiaire d'un moyen formant soupape (60), ledit moyen formant soupape s'ouvrant pour permettre une réduction du volume de la chambre de compensation d'usure seulement lorsque le piston principal (53) est poussé dans une position de complète rétraction par un levier de libération d'embrayage associé (58) suite à une quantité donnée d'usure de l'embrayage associé.

2. Système selon la revendication 1, dans lequel chaque membrane (24, 67) est de forme annulaire et est étanche à sa périphérie extérieure avec l'enveloppe de cylindre (13, 51) et à sa périphérie intérieure avec le piston associé (16, 53).

3. Système selon la revendication 1 ou la revendication 2, dans lequel des moyens de passage (40, 71a) sont prévus entre la chambre auxiliaire (23, 68) et la chambre de travail (22, 55) de chaque piston (16, 53), lesdits moyens de passage étant agencés pour s'ouvrir quand le piston associé n'effectue pas une course de travail.

4. Système selon la revendication 3, dans lequel l'extrémité des moyens de passage (40, 71a) est agencée pour s'ouvrir dans la chambre de travail associée (22, 25) lorsque le piston associé (16, 53) est dans une position de rétraction.

5. Système selon la revendication 3, dans lequel le moyen de passage (71a) est prévu dans le piston associé (53), et l'écoulement à travers le moyen de passage est commandé par une soupape à clapet (72) sur le piston associé qui est maintenu fermé par la pression de chambre de travail durant chaque course de travail du piston, et qui s'ouvre quand la pression de chambre de travail chute en dessous du niveau de pression de la chambre auxiliaire associée (68) lors de la course de rétraction du piston.

6. Système selon l'une quelconque des revendications 1 à 5, dans lequel le joint d'étanchéité de piston (16, 71) est fait en matière plastique, lequel est sollicité radialement vers l'extérieur contre l'alésage associé (15, 70) par une pièce rapportée élastique (35, 72) qui est un ajustement à force dans un évidement (36, 73) ménagé dans le piston.

7. Système selon la revendication 6, dans lequel la pièce rapportée (35, 72) et l'évidement (36, 73) sont de forme annulaire.

8. Système selon la revendication 6 ou la revendication 7 lorsqu'elle dépend de la revendication 5, dans lequel la pièce rapportée (72) incorpore la soupape à clapet.

9. Système selon l'une quelconque des revendications 6 à 8, dans lequel la pièce rapportée (35, 72) est réalisée avec un matériau élastomère.

10. Système selon la revendication 6, dans lequel la pièce rapportée est faite en métal souple.

11. Système selon l'une quelconque des revendications 1 à 10, dans lequel l'alésage (14, 70) de chaque cylindre (10, 11) est fait en matière plastique.

12. Système selon l'une quelconque des revendications 1 à 11, dans lequel l'alésage du cylindre maître (10) est un manchon métallique (15).

13. Système selon l'une quelconque des revendications 1 à 12, dans lequel le cylindre maître (10), le cylindre esclave (11) et le conduit (12) sont remplis d'un fluide hydraulique avant d'être montés dans un véhicule à moteur, le système pouvant être transporté dans cet état prérempli vers l'emplacement où il doit être adapté au véhicule.

14. Système selon la revendication 13, comprenant au moins un accouplement hydraulique à raccordement rapide (100) permettant que le système soit transporté dans deux parties, ou plus préremplies qui peuvent être raccordées par l'accouplement à raccordement rapide, à l'emplacement où le système doit être adapté au véhicule.

15. Système selon la revendication 13 ou la revendication 14, qui est conçu pour être transporté vers l'emplacement où il doit être adapté au véhicule, la chambre de travail (22) du cylindre maître (10) étant à ou près de son volume maximal, et la chambre de compensation d'usure (59) du cylindre esclave (11) à ou près de son volume minimal.

16. Système selon la revendication 15, dans lequel, lors de la course de travail initiale du cylindre maître (10), le fluide déchargé de la chambre de travail (22) du cylindre maître est admis dans la chambre de compensation d'usure (59) du cylindre esclave (11) afin d'étendre complètement le deuxième piston et amener le deuxième piston (56) dans une liaison de fonctionnement avec le levier de libération d'embrayage associé (58).

17. Procédé pour fournir un système d'actionnement d'embrayage prérempli sur un véhicule, comprenant la fourniture d'un système d'actionnement selon l'une quelconque des revendications 1 à 16, le remplissage du cylindre maître (10), du cylindre esclave (11) et du conduit (12) avec un fluide hydraulique, le transport du système vers un emplacement où il doit être adapté au véhicule, l'adaptation du système au véhicule et le fonctionnement du cylindre maître (10) afin de conditionner le système pour qu'il soit prêt à fonctionner.

18. Procédé selon la revendication 17, comprenant la fourniture d'un système d'actionnement selon les revendications 13 et 14, dans lequel le fonctionnement initial du cylindre maître (10) décharge un fluide, du cylindre maître dans la chambre de compensation d'usure (59) du cylindre esclave (11), afin d'étendre le deuxième piston (56) et amener le deuxième piston dans une liaison de fonctionnement avec le levier de libération d'embrayage associé (58).

19. Procédé selon la revendication 17, consistant à fournir un système d'actionnement selon la revendication 14, prendre chaque partie du système, faire évacuer l'air du système par l'intermédiaire de la partie de l'accouplement à raccordement rapide (100) raccordée avec chaque partie respective du système, et à remplir chaque partie du système avec un fluide hydraulique par l'intermédiaire de ladite partie de l'accouplement à raccordement rapide (100).

20. Procédé selon la revendication 9, dans lequel la chambre de travail (22) du cylindre maître (10) est maintenue à ou près de son volume maximal durant l'évacuation et le remplissage.

21. Procédé selon la revendication 19 ou la revendication 20, pour remplir un système selon la revendication 15, dans lequel le volume de la chambre de compensation d'usure (59) est maintenu à ou près de son volume minimal durant l'évacuation ou le remplissage.

22. Procédé selon l'une quelconque des revendications 19 à 21, dans lequel les pistons (16, 53) des cylindres maître (10) et esclave (11) sont maintenus dans des positions axiales dans leurs alésages (15, 70) respectifs qui placent leurs chambres auxiliaires (23, 68) respectives en communication avec leurs chambres de travail (22, 55) respectives durant l'évacuation et le remplissage.

23. Procédé selon la revendication 22, dans lequel la communication entre les chambres de travail (22) et auxiliaire (23) du cylindre maître (10) est obtenue par l'intermédiaire d'un orifice de récupération (40) prévu dans l'alésage de cylindre maître (15) qui est ouvert lorsque la chambre de travail est à ou près de son volume maximal.

24. Procédé selon la revendication 22 ou la revendication 23, dans lequel la communication entre les chambres de travail (55) et auxiliaire (68) du cylindre esclave (11) est obtenue par l'extension du cylindre esclave au-delà de sa course de travail normale vers un emplacement auquel le piston principal (53) dépasse une ou plusieurs rainures (70a) axiales de l'alésage de piston (70) qui raccordent les chambres de travail et auxiliaire.

25. Procédé selon la revendication 24, dans lequel, afin de permettre l'extension du cylindre esclave (11) au-delà de sa course de travail normale, une partie (50) de l'enveloppe de cylindre esclave est retirée.
